# EUROPÄISCHE PATENTANMELDUNG

(11) **EP 2 827 011 A2**
(43) Veröffentlichungstag der Anmeldung: **21.01.2015**
(21) Anmeldenummer: 14172467.4
(22) Anmeldetag: 16.06.2014
(51) Int. Cl.: F16C 35/07, F16C 33/58

(54) **Anordnung zum Befestigen einer Lagerung**

(30) Priorität: 16.07.2013 DE 102013213845
(71) Anmelder: ZF Friedrichshafen AG, 88038 Friedrichshafen (DE)
(72) Erfinder: Guerra, Fabio, 88069 Tettnang (DE)

(57) **Zusammenfassung**

Es wird eine Anordnung zum Befestigen einer Lagerung (1) an einer Welle (2) in einem Getriebegehäuse (3) vorgeschlagen, wobei die Lagerung (1) über zumindest eine Sicherungsmutter (6) befestigt ist, und wobei in die Sicherungsmutter (6) zumindest ein Dichtelement integriert ist. Ferner wird eine Sicherungsmutter (6) für eine Lagerung (1) an einer Welle (2) vorgeschlagen, wobei in die Sicherungsmutter (6) ein Dichtelement integriert ist.

## Beschreibung

Die vorliegende Erfindung betrifft eine Anordnung zum Befestigen einer Lagerung an einer Welle in einem Getriebegehäuse gemäß der im Oberbegriff des Patentanspruches 1 näher definierten Art. Ferner betrifft die Erfindung eine Sicherungsmutter zum Befestigen einer Lagerung gemäß der im Oberbegriff des Patentanspruches 10 näher definierten Art.

Lagerbefestigungsanordnungen für Getriebegehäuse sind bekannt. Üblicherweise ist eine Sicherungsmutter koaxial zu einer Welle angeordnet, um eine Lagerung auf der Welle axial zu sichern. Um eine ausreichende Abdichtung des Getriebegehäuses in diesem Bereich vorzusehen, ist üblicherweise eine Labyrinthgeometrie vorgesehen, die mit weiteren Dichtelementen die Dichtfunktion realisieren. Aufgrund der axial hintereinander angeordneten Bauteile und den nicht unerheblichen axialen Abmessungen der jeweiligen Bauteile ergibt sich ein erheblicher axialer Bauraumbedarf.

Der vorliegenden Erfindung liegt die Aufgabe zu Grunde, eine Anordnung zum Befestigen einer Lagerung auf einer Welle und eine Sicherungsmutter zum Befestigen der Lagerung vorzuschlagen, welche möglichst geringeren axialen Bauraum benötigen.

Diese Aufgabe wird erfindungsgemäß durch die Merkmale des Patentanspruches 1 bzw. 10 gelöst. Vorteilhafte Ausgestaltungen ergeben sich aus den jeweiligen Unteransprüchen, der Beschreibung und den Zeichnungen.

Die der Erfindung zu Grunde liegende Aufgabe wird durch eine Anordnung zum Befestigen bzw. Sichern einer Lagerung an einer Welle in einem Getriebegehäuse gelöst, wobei die Lagerung über zumindest eine Sicherungsmutter oder dergleichen befestigt ist. Erfindungsgemäß ist vorgesehen, dass in die Sicherungsmutter zumindest ein Dichtelement integriert ist.

Durch die Integration zumindest eines Dichtelementes in die Sicherungsmutter kann erheblicher axialer Bauraum eingespart werden und somit auch die Herstellungskosten des Getriebegehäuses deutlich verringert werden. Hierfür ist eine spezielle konstruktive Gestaltung der Sicherungsmutter erforderlich, bei der ein entsprechender Aufnahmebereich oder dergleichen gebildet wird, indem das Dichtelement untergebracht werden kann. Je nach Gestaltung des Aufnahmebereiches kann ein beliebiges Dichteelement in die Sicherungsmutter integriert werden. Der Aufnahmebereich ist vorzugsweise in dem radialen Bereich zwischen Innenumfang und Außenumfang der Sicherungsmutter vorgesehen. Der Aufnahmebereich kann sich z. B. über den gesamten Umfang der Sicherungsmutter erstrecken. Es ist aber auch mög-lich, dass mehrere zum Beispiel auch voneinander getrennte Aufnahmebereiche über den Umfang verteilt sind. Die äußere Form der Sicherungsmutter kann je nach Einsatzweck entsprechend angepasst gestaltet werden.

Vorzugsweise kann die Sicherungsmutter im Inneren des Getriebegehäuses koaxial zur Welle angeordnet sein. Auf diese Weise kann ein direkter Kontakt mit dem zu befestigenden bzw. zu sichernden Innenring der Lagerung geschaffen werden. Wenn die Sicherungsmutter außerhalb des Getriebegehäuses angeordnet ist, ist es eventuell erforderlich, dass ein Distanzelement zwischen Sicherungsmutter und Innenlagerring vorgesehen ist.

Bevorzugt kann die vorgeschlagene Anordnung bei einem Getriebegehäuse für eine Windturbine oder dergleichen eingesetzt werden, da dort in der Regel nur ein geringer axialer Bauraum zur Verfügung steht. Es sind aber andere Einsatzgebiete denkbar.

Die der Erfindung zu Grunde liegende Aufgabe wird auch durch eine Sicherungsmutter zum Befestigen einer Lagerung auf einer Welle gelöst, bei der in die Sicherungsmutter zumindest ein Dichtelement integriert ist. Bezüglich der möglichen Ausführungen und konstruktive Gestaltungen der Sicherungsmutter wird auf die vorbeschriebenen Ausführungen Bezug genommen. Somit wird neben der Anordnung mit der Sicherungsmutter auch die Sicherungsmutter separat beansprucht.

Nachfolgend wird die vorliegende Erfindung anhand der Zeichnungen weiter erläutert. Es zeigen:
Fig. 1 eine Teilansicht eines Getriebegehäuses mit einer möglichen Ausführungsvariante einer erfindungsgemäßen Anordnung zum Befestigen einer Lagerung;
Fig. 2 eine quergeschnittene Ansicht des Getriebegehäuses gemäß Figur 1;
Fig. 3 eine Einzelteilansicht einer möglichen Ausführungsvariante einer Sicherungsmutter; und
Fig. 4 eine Teilansicht des Getriebegehäuses mit einer weiteren Ausführungsvariante der erfindungsgemäßen Anordnung.

In den Figuren sind verschiedene Ausführungsvarianten einer Anordnung zum Befestigen einer Lagerung 1 an einer Welle 2 in einem Getriebegehäuse 3 beispielhaft dargestellt, wobei die Lagerung 1 einen mit der Welle 2 verbundenen Innenring 4 und einen mit dem Getriebegehäuse 3 verbundenen Außenring 5 umfasst. Der Innenring 4 wird über eine Sicherungsmutter 6 befestigt bzw. gesichert.

Erfindungsgemäß ist vorgesehen, dass in die Sicherungsmutter 6 zumindest ein Dichtelement integriert ist. Dazu weist die Sicherungsmutter 6 unabhängig von den jeweiligen Ausführungsvarianten einen Aufnahmebereich zwischen dem Innenumfang 7 und dem Außenumfang 8 der Sicherungsmutter 6 auf.

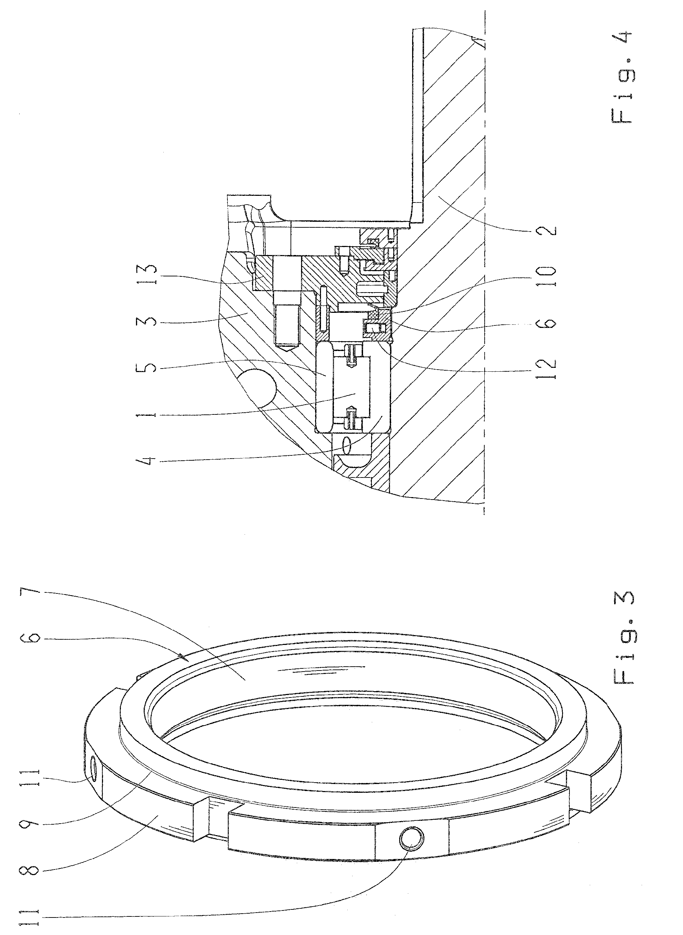

Wie insbesondere aus Fig. 3 ersichtlich ist, ist der Aufnahmebereich als etwa ringförmig umlaufende Nut 9 zwischen dem Innenumfang 7 und dem Außenumfang 8 ausgeführt. Als Dichtelement ist ebenfalls unabhängig von den Ausführungsvarianten z.B. ein V-Ring 10 vorgesehen, der mit der Labyrinthgeometrie eine sichere Abdichtung des Getriebegehäuses 3 realisiert.

Um nach der Montage eine Verdrehsicherung für die Sicherungsmutter 6 auf der Welle 2 zu realisieren, ist unabhängig von den jeweiligen Ausführungsvarianten vorgesehen, dass die Sicherungsmutter 6 mehrere über den Umfang verteilt angeordnete radiale Bohrungen 11 aufweist, denen jeweils eine Stiftschraube 12 oder dergleichen als Verdrehsicherung zugeordnet ist. Durch das Einschrauben der Stiftschrauben 12 wird eine reibschlüssige bzw. kraftschlüssige Verbindung zwischen der Sicherungsmutter 6 und der Welle 2 realisiert, so dass die über ein Gewinde mit der Welle 2 verschraubte Sicherungsmutter 6 gesichert ist.

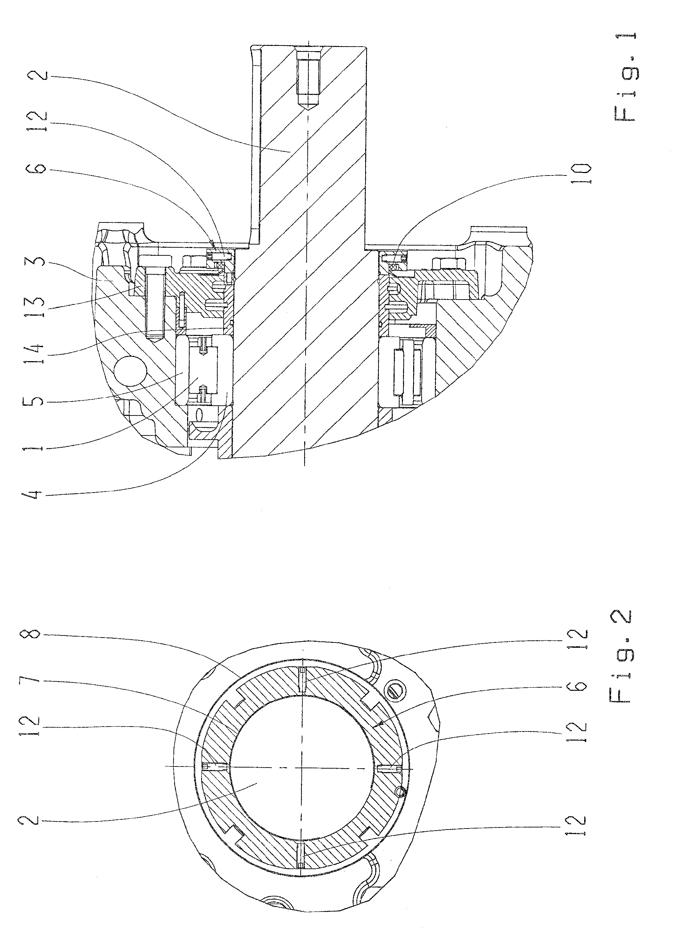

Bei der in Fig. 1 dargestellten Ausführungsvariante der Anordnung ist die Sicherungsmutter 6 außerhalb des Getriebegehäuses 3 also axial vor dem Deckel 13 des Getriebegehäuses 3 auf der Welle 2 angeordnet. Somit ist ein Distanzelement beispielsweise als Distanzbuchse oder -hülse 14 zum axialen Überbrücken erforderlich, die die Sicherungsmutter 6 mit dem Innenring 4 der zu befestigende Lagerung 1 verbindet. Bei dieser Ausführungsvariante dient der V-Ring als Staub- und Spritzwasserschutz.

In Fig. 4 ist eine weitere Ausführungsvariante dargestellt, bei der die Sicherungsmutter 6 innerhalb des Getriebegehäuses 3 angeordnet ist und somit direkt mit dem Innenring 4 der Lagerung 1 in Kontakt steht. Bei dieser Ausführungsvariante dient der V-Ring 10 vorzugsweise dazu, dass kein Öl in die Labyrinthgeometrie eintritt. Demzufolge ist die Labyrinthgeometrie entsprechend angepasst, um einen Eintritt von Staub und Spritzwasser in das Getriebe zu vermeiden.

### Bezugszeichen

- 1: Lagerung
- 2: Welle
- 3: Getriebegehäuse
- 4: Innenring der Lagerung
- 5: Außenring der Lagerung
- 6: Sicherungsmutter
- 7: Innenumfang
- 8: Außenumfang
- 9: ringförmig umlaufende Nut
- 10: V-Ring
- 11: Bohrungen
- 12: Stiftschraube
- 13: Deckel
- 14: Distanzbuchse

## Patentansprüche

1. Anordnung zum Befestigen einer Lagerung (1) an einer Welle (2) in einem Getriebegehäuse (3), wobei die Lagerung (1) über zumindest eine Sicherungsmutter (6) befestigt ist, **dadurch gekennzeichnet, dass** in die Sicherungsmutter (6) zumindest ein Dichtelement integriert ist.

2. Anordnung nach Anspruch 1, **dadurch gekennzeichnet, dass** die Sicherungsmutter (6) zumindest einen Aufnahmebereich für das Dichtelement aufweist.

3. Anordnung nach Anspruch 2, **dadurch gekennzeichnet, dass** der Aufnahmebereich als etwa ringförmig umlaufende Nut (9) zwischen Innenumfang (7) und Außenumfang (8) der Sicherungsmutter (6) vorgesehen ist.

4. Anordnung nach einem der vorangehenden Ansprüche, **dadurch gekennzeichnet, dass** das Dichtelement als V-Ring (10) ausgeführt ist.

5. Anordnung nach einem der vorangehenden Ansprüche, **dadurch gekennzeichnet, dass** die Sicherungsmutter (6) mehrere über den Umfang verteilt angeordnete radiale Bohrungen (11) aufweist, denen jeweils eine Stiftschraube (12) als Verdrehsicherung der Sicherungsmutter (6) auf der Welle (2) zugeordnet ist.

6. Anordnung nach einem der vorangehenden Ansprüche, **dadurch gekennzeichnet, dass** die Sicherungsmutter (6) außerhalb des Getriebegehäuses (3) axial vor dem Deckel (13) des Getriebegehäuses (3) auf der Welle (2) angeordnet ist.

7. Anordnung nach Anspruch 6, **dadurch gekennzeichnet, dass** die Sicherungsmutter (6) über eine Distanzbuchse (14) mit einem Innenring (4) der Lagerung (1) in Kontakt steht.

8. Anordnung nach einem der Ansprüche 1 bis 5, **dadurch gekennzeichnet, dass** die Sicherungsmutter (6) im Getriebegehäuse (3) angeordnet ist und direkt mit einem Innenring (4) der Lagerung (1) in Kontakt steht.

9. Anordnung nach einem der vorangehenden Ansprüche, **dadurch gekennzeichnet, dass** das Getriebegehäuse (3) als Getriebegehäuse einer Windturbine ausgeführt ist.

10. Sicherungsmutter für eine Lagerung (1) an einer Welle (2), **dadurch gekennzeichnet, dass** in die Sicherungsmutter (6) ein Dichtelement integriert ist.

11. Sicherungsmutter nach Anspruch 10, **dadurch gekennzeichnet, dass** zumindest ein Aufnahmebereich für das Dichtelement vorgesehen ist.

12. Sicherungsmutter nach Anspruch 11, **dadurch gekennzeichnet, dass** der Aufnahmebereich als etwa ringförmig umlaufende Nut (9) zwischen dem Innenum-fang (7) und dem Außenumfang (8) vorgesehen ist.

13. Sicherungsmutter nach einem der Ansprüche 10 bis 12, **dadurch gekennzeichnet, dass** das Dichtelement als V-Ring (10) ausgeführt ist.
